# EUROPEAN PATENT SPECIFICATION

(11) **EP 3 497 287 B1**
(45) Date of publication and mention of the grant of the patent: **06.12.2023**
(21) Application number: 17830133.9
(22) Date of filing: 22.06.2017
(51) Int. Cl.: E01F 9/673, E01F 9/669, F16M 13/02

(54) **APPARATUS AND METHOD FOR ATTACHING SIGNS TO FOUNDATION MEMBERS SUCH AS ROAD BARRIERS**
VORRICHTUNG UND VERFAHREN ZUM ANBRINGEN VON SCHILDERN AN GRÜNDUNGSELEMENTEN WIE STRASSENBARRIEREN
APPAREIL ET PROCÉDÉ POUR FIXER DES PANNEAUX À DES ÉLÉMENTS DE FONDATION TELS QUE DES BARRIÈRES ROUTIÈRES

(30) Priority: 18.07.2016 CA 2936367
(43) Date of publication of application: 19.06.2019
(73) Proprietor: AMG Metals Inc., Newmarket, Ontario L3Y 4X1 (CA); Powell (Richmond Hill) Contracting Limited, Gormley, Ontario L0H 1G0 (CA); DELAMERE/POWELL HOLDCO INC., Concord, ON L4K 1P2 (CA)
(72) Inventor: POWELL, Ben, Sharon, Ontario L0G 1V0 (CA); PIERSON, John David, Newmarket, Ontario L3Y 4X1 (CA); DELAMERE, James Harold, Toronto, Ontario M6S 3L8 (CA); VAKILI, Mohammad Bagher, Toronto, Ontario M2K 2K2 (CA)
(74) Representative: Garcia González, Sergio
(86) International application number: PCT/CA2017/050766
(87) International publication number: WO 2018/014110

(56) References cited:
- CA-A1- 2 178 827
- CA-A1- 2 892 412
- US-A- 4 050 401
- US-A- 5 094 023
- US-B1- 6 237 883
- US-B2- 9 082 304

## Description

### FIELD OF THE DISCLOSURE

The present disclosure relates to improvements to the attachment of signs, and other equipment, to a foundation, preferably road barriers, in particular concrete road barriers, and in particular a support, for a portable variable message sign, that may be rapidly deployed onto a temporary road barrier.

### BACKGROUND

Currently, road signs, and in particular portable variable message signs (PVMS) used on roadways during road construction or when traffic is being redirected, require permanent footings, typically permanent concrete footings, or a portable trailer requiring protection from traffic. Permanent signs cannot be installed cost-effectively for temporary application and do not typically allow for rapid deployment due to the requirement of permanent concrete footings. Portable trailer mounted signs are restricted in sign size and require protection from traffic as well as requiring a wide enough base and ballast to prevent toppling of the sign, due to high winds, wind turbulence or the like. Furthermore, the current systems do not allow for rapid relocation of the signs, upon completion of the work or redirection of traffic, to another site.

Other temporary road signs have a frame constructed of wood secured to the ground by sand bags or the like. The above systems do not accommodate roadways separated by a barrier or median in which the roadways are of different elevation. In this instance, the temporary road signs may not be level facilitating reading thereof, or shims are required to level the sign.

U.S. Patent 5244172 describes a U-shaped saddle for mounting a post for a sign to a concrete barrier. U.S. Patent 8230628 describes a precast concrete road barrier which includes a recessed channel, within and extending lengthwise of the barrier, for receiving a sign. U.S. Patent 4338041 describes a glarefoil assembly for mounting to a median barrier. U.S. Patent 9082304 describes a post based mounting for supporting a traffic message board including a post which couples to a Jersey barrier by means of an adapter.

The above systems rely on the integrity of the permanent concrete median barrier for support and cannot be utilized with steel beam guide rail medians or on shoulders of a roadway. There is a need for a roadway sign base support that does not rely on the integrity of the permanent median barrier for support and may be installed in conjunction with any type of median barrier such as a permanent barrier (including a ditch or the like) and temporary barriers, and/or installed where a barrier is not present. There is also a need for a support system that may accommodate signs of various sizes. There is also a need for a support system that may accommodate roadways with different elevations. There is also a need for a support system that may accommodate permanent median barriers of varying heights. There is also a need for a support system that mitigates rotational forces on the system during high winds or impact. There is also a need for a support system that allows for absorbing impact loads. There is also a need for a support system that mitigates damage and injury during high winds or impact by a vehicle. There is also a need for a support system that is compliant with crash test standards.

### SUMMARY

According to one aspect, there is provided a support system defined by the features of claim 1, preferably for a sign, more preferably for a variable message sign, mountable on at least two foundation members, preferably barriers, preferably two median barriers, preferably each of said foundation members comprising at least one of a barrier wall section, a temporary or permanent barrier, a temporary tall wall barrier, a pre cast concrete, a pile, a screw pile, a helical pile, a rock anchor, a mass of concrete, metal or other material, a ballast system, metal scaffolding/framing capable of supporting a load, and combinations thereof, and in one embodiment further comprising a permanent foundation in combination with any of the above, preferably two longitudinally spaced apart median barriers, said system comprising:
i) a base support having a first end and a second end, preferably being length adjustable, preferably two length adjustable base supports, preferably each of said first end and second end being articulately connectable to a first and second foundation member respectively; preferably each length adjustable base support comprises a central portion and two end portions, wherein each of said end portions engage telescopically with said central portion, preferably via complementary apertures allowing for connecting of each of said end portions to said central portions via said apertures with a fastener through said complementary apertures, preferably a plurality of fasteners, more preferably a bolt through aligned complimentary apertures of the central portion and said end portions; wherein said complementary apertures on said central portion are larger than the complementary apertures on each of said end portions. In another embodiment, said complementary apertures on said central portion are smaller than the complementary apertures on each of said end portions; wherein the combination of the larger and smaller apertures allow for length adjustment of said base support for example during installation on said foundation members) and for movement during an impact and/or load and/or seismic force or collision; in one embodiment, said larger apertures are elongated slots;
ii) optionally, a central base support, for connecting said two length adjustable base supports;
iii) a vertical support for supporting an item, preferably a sign, said vertical support having a first end and a second end wherein said second end is connectable to said base support; preferably to said central base support; preferably said vertical support being articulately connectable to said base support, preferably to said central base support; in one embodiment, said vertical support is length adjustable; at least one item tether for tethering said at least one item to said vertical support, preferably a sign tether for tethering said sign to said vertical support; preferably said at least one item tether is a cable, more preferably a steel cable or like;
iv) said base support further comprises a first foundation member bracket for connection to a first foundation member, said first foundation member bracket proximate said first end of said base support; preferably said first length adjustable base support;
v) said base support further comprises a second foundation member bracket for connection to a second foundation member distant said first foundation member, said second foundation member bracket proximate said second end of said base support; preferably said second length adjustable base support;
vi) in another embodiment, said second base support further comprises a first foundation member bracket for connection to said first foundation member, said first foundation member bracket proximate said first end of said second base support; preferably said second length adjustable base support;
vii)in another embodiment, said second base support further comprises a second foundation member bracket for connection to a second foundation member distant said first foundation member, said second foundation member bracket proximate said second end of said second base support; preferably said second length adjustable base support; preferably each of said foundation member brackets being articulately adjustable and connectable on said respective foundation member; and
viii) at least one vertical brace, preferably a length adjustable vertical brace, preferably at least two length adjustable vertical braces, more preferably at least four length adjustable vertical braces, said vertical brace having a first end and a second end; wherein said first end of said vertical brace is connectable, preferably pivotally connectable, to said vertical sign support between said first end and said second end of said vertical sign support; and said second end of said vertical brace is connectable proximate one end of said base support; preferably said second end of said vertical brace is pivotally connectable to at least one of said foundation member brackets.

Said base support further comprises at least one vertical support connector for reducing a) rotation of said vertical support on said base support and b) detachment of said vertical support from said base support.

Said system further comprises at least one vertical brace tether for tethering said at least one vertical brace to said base support. Preferably said at least one vertical brace tether is a chain, more preferably a steel chain.

In one embodiment, said system further comprises a sign, preferably a variable message sign, connectable to said vertical sign support. In a preferred embodiment, said system further comprises a least one sign tether for tethering said sign to said vertical sign support; preferably said at least one sign tether is a cable, more preferably a steel cable.

In another embodiment, said system may support at least one of the following in addition to the sign and/or independent of said sign, as required:

At least one sensor, preferably selected from a radar based traffic monitoring sensor, Bluetooth vehicle tracking sensor, video detection traffic monitoring sensor, weather station equipment for monitoring at least one of wind, temperature, barometer, humidity, and radar, road temperature sensor, road surface sensor (e.g. ice, oil, etc.), pollution monitoring sensor, a CCTV camera (that may be remotely controlled) and combinations thereof;

At least one communication device, preferably selected from a cellular modem (e.g. 3G or LTE), Bluetooth (near field communications for sign or other device control), wi-fi modem for same as above, satellite cellular modem (for areas outside cell tower range) and combinations thereof.

In yet another embodiment, said system further comprises a power source, preferably a solar panel and battery, for providing power to said sign. In another embodiment, said solar panel is connectable, preferably pivotally connectable proximate said second end of said vertical sign support. In a preferred embodiment, said system further comprises at least one solar panel tether for tethering said solar panel to said vertical sign support, preferably said at least one solar panel tether is a cable, more preferably a steel cable.

In any of the embodiments, said at least one solar panel tether, said at least one item tether and said at least one vertical brace tether is selected from a chain, cable and combinations thereof. Preferably Grade 70 Transport Chain.

In yet another embodiment, said power source may further comprise an alternate power source, preferably comprising a wind turbine generator, preferably to trickle charge the battery when there is insufficient solar power such as through the winter months in climactic regions where there is less sunlight hours and intensity in winter months, a generator, preferably a propane, gas or diesel generator, a fuel cell, preferably a hydrogen or other type of fuel cell. In yet another embodiment, said solar panel further comprises an actuated solar tracking system.

Preferably said system further comprises a controller for controlling at least one of the following: message on said sign, power to said sign, data transmission and reception from and to said system and combinations thereof.

In one embodiment, said system, may accommodate median barriers of various sizes, shapes and widths as well as accommodate median barriers longitudinally spaced apart from each other at various distances.

In one embodiment, said first end of said at least one vertical brace is movably connected to said vertical sign support, preferably movably connected via a collar, preferably sliding adjustable, running along the vertical sign support. In another embodiment, said vertical brace is a cable or the like.

In one embodiment, each of said base support is length adjustable, preferably telescopically adjustable with at least one stop for fixing the length of said base at a desired length.

In one embodiment, each of said foundation member brackets further comprise at least one connector, preferably a plurality of connectors for securely connecting said brackets to said foundation members. The at least one connector preferably to removably secure said brackets to said foundation members. Preferably said at least one connector is an anchoring device for anchoring to said foundation member, preferably a threaded rod running through each of said foundation member bracket. Preferably each of said foundation member bracket is articulately connectable to a side of a foundation member.

In another embodiment the system is mountable on at least two barriers, preferably at least two temporary concrete barriers. In another embodiment, the system is mountable on at least one permanent barrier and one temporary barrier.

Although any suitable material that will meet the requirements of the specific situation, the preferred material to be used for the brackets, base support, central support and vertical support, and vertical brace is steel (galvanized or painted).

An alternative material is aluminum, stainless steel and combinations of all these materials.

A preferred connector for the brackets include anchors or bolts drilled into or through the foundation member, clamped to utilize friction forces and combinations thereof.

According to another aspect, there is provided a method of mounting defined by the features of claim 15 to at least two spaced apart foundation members, preferably two spaced apart median barriers, more preferably two longitudinally spaced apart concrete barriers, comprising the steps of:
i) anchoring at least one support bracket to each spaced apart foundation member;
ii) mounting a length adjustable base support having two ends, preferably two length adjustable base supports separated by a central base support, to said at least one support bracket;
iii) attaching, preferably articulately attaching, a vertical support to said central base support;
iv) levelling said vertical support;
v) attaching a sign as item to said vertical support;
vi) attaching a solar panel to said vertical support;
vii) orienting said sign and said solar panel as required; and
viii) tightening attachments ensuring a secure connection.

Said method further comprises attaching and adjusting said at least one vertical brace, preferably at least two vertical braces, substantially normal to each other, between said vertical support and said base support. More preferable attaching and adjusting at least three vertical braces between said vertical support and said base support. Even more preferably attaching and adjusting at four vertical braces, wherein each vertical brace is normal to each other, between said vertical support and said base support.

In one embodiment, the solar panel is connected directly to the sign. In another embodiment, the solar panel is connected to the battery and the battery is connected to the sign. In yet another embodiment, the solar panel is connected to the battery, the battery is connected to the controller and the controller is connected to the sign.

In another embodiment, said system is Manual for Assessing Safety Hardware (MASH) compliant and/or Canadian Highway Bridge Design Code compliant for at least one of wind, seismic, environmental loading and combinations thereof, and/or American Association of State Highway and Transportation Officials (AASHTO compliant

MASH is part of (AASHTO). MASH provides evaluation techniques for the crash testing of safety hardware devices for use on the National highway System (NHS). MASH presents uniform guidelines for crash testing permanent and temporary highway safety features and recommends evaluation criteria to assess test results. Tests under MASH are determined by the testing agency and are required to test the most vulnerable components of safety hardware devices. This may vary depending on the opinion of the testing engineer. Some criteria include light truck test vehicle should be 2270P vehicle; gating terminal and crash cushion impact angle is 5 degrees; variable message signs and arrow board trailers are added to a TMA (( Truck Mounted Attenuator) also known as a "crash truck", they are large trucks >5 ton that have crash attenuators mounted to the back to safely stop impacting vehicles) crash test matrix; support structure and work zone traffic control device is included in light truck testing; windshield damage criteria is included and vehicle rebound in crash cushion tests is required. The MASH report is available at https://bookstore.transportation.org.

The Canadian Highway Bridge Design Code and AASHTO apply to the design, evaluation, and structural rehabilitation design of fixed and movable highway bridges including provisions for the design of barriers, highway accessory supports of a structural nature, such as lighting poles, and sign support structures.

These and other objects will become more apparent from the accompanying figures in the following detailed description.

### BRIEF DESCRIPTION OF THE FIGURES

Figure 1 is a front view of the system in a preferred embodiment.
Figure 2 is a perspective view of the bracket in a preferred embodiment.
Figure 2A is a front view of the bracket of Figure 2.
Figure 2B is a side view of the bracket of Figure 2.
Figure 2C is a perspective view of the articulating plate in a preferred embodiment.
Figure 2D is a cross sectional view of the plate of Figure 2C.
Figure 3 is a perspective view of the system of Figure 1.
Figure 3A depicts the base support in a preferred embodiment.
Figure 4 depicts the central support and articulating joint of the central support in a preferred embodiment.
Figure 4A depicts the central support in a preferred embodiment.
Figure 5A depicts the vertical brace in a preferred embodiment.
Figure 5B depicts a perspective view of the collar for the brace of Figure 5A.
Figure 5C depicts an overhead view of the collar of Figure 5B.
Figure 6 depicts the solar panel and associated connections of the system in a preferred embodiment.
Figure 6A depicts the pivotal arms of the solar panel in a first position.
Figure 6B depicts the pivotal arms of the solar panel in a second position.
Figure 7 depicts the base support of the present system when used with roadways of different elevations.
Figure 8 depicts the central support for the vertical support on the horizontal base.
Figure 9 depicts the base support with elongated slots on the central portion, in one embodiment.
Figures 10A and 10B depict the tethering system for the vertical braces and the horizontal brace, in one embodiment.
Figure 11 depicts the tethering system for the sign and solar panel, in one embodiment.

### DETAILED DESCRIPTION

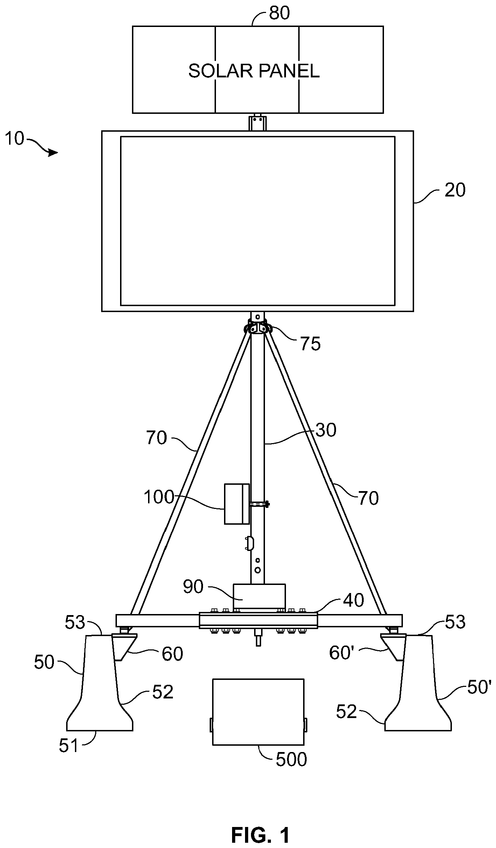

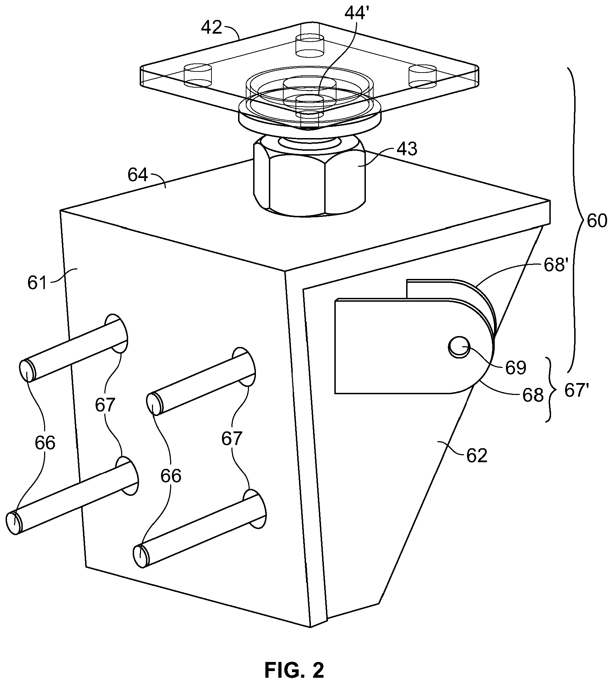

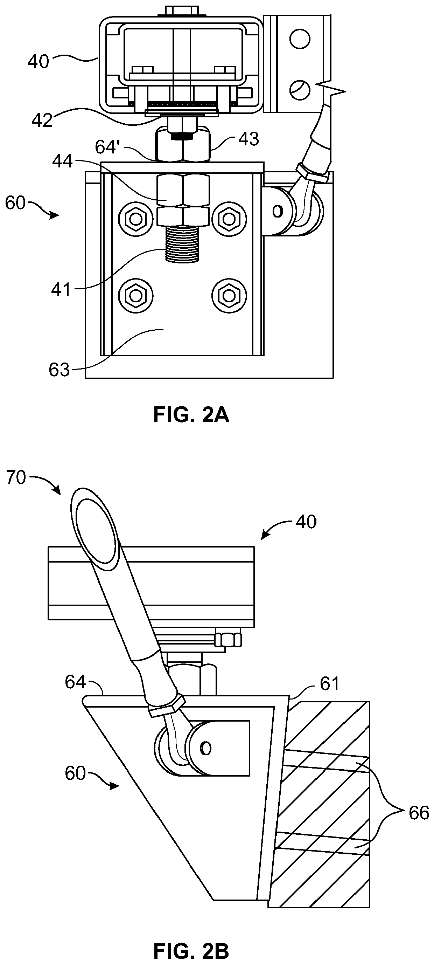

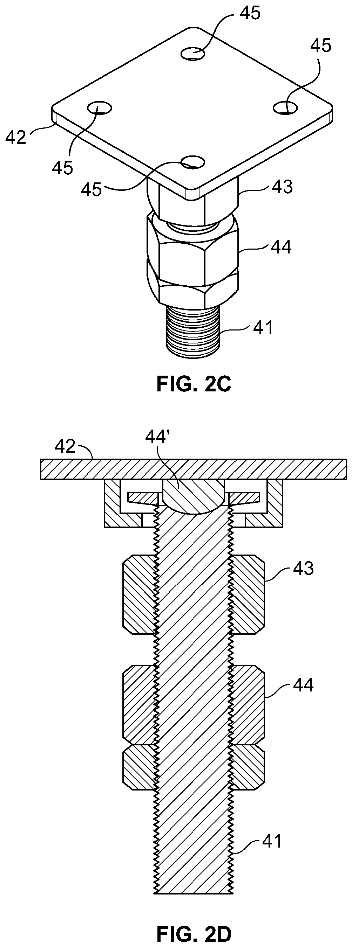

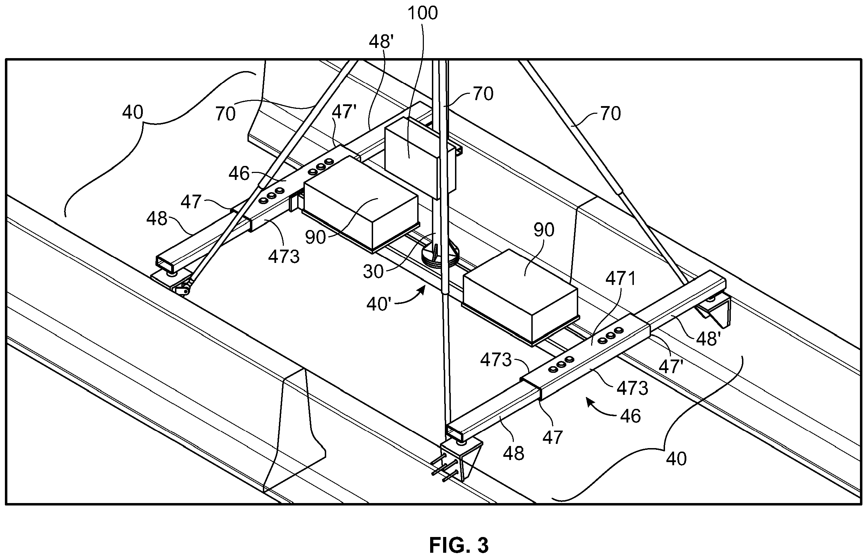

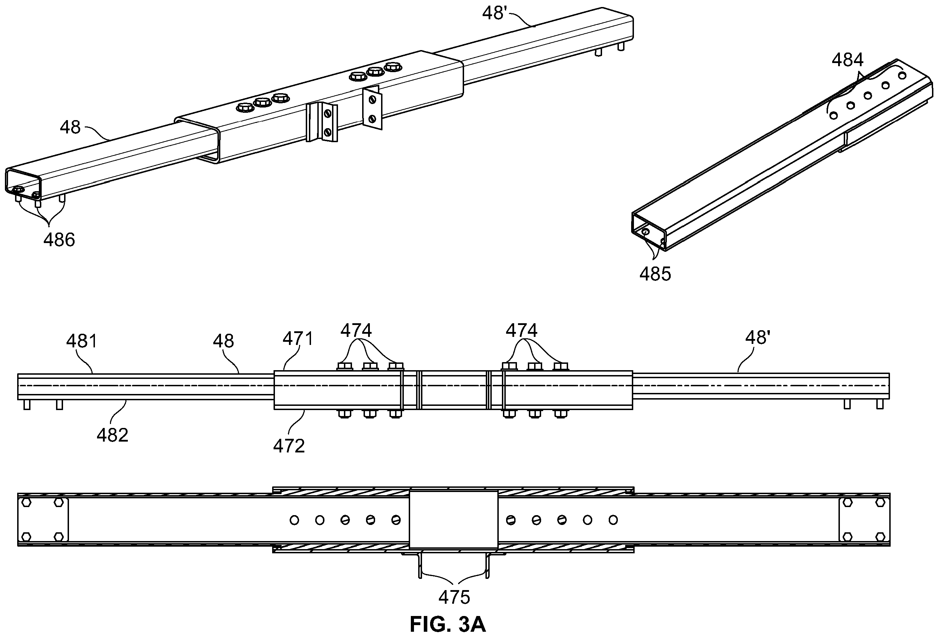

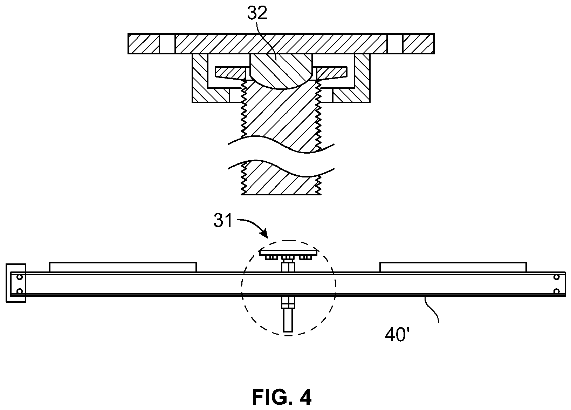

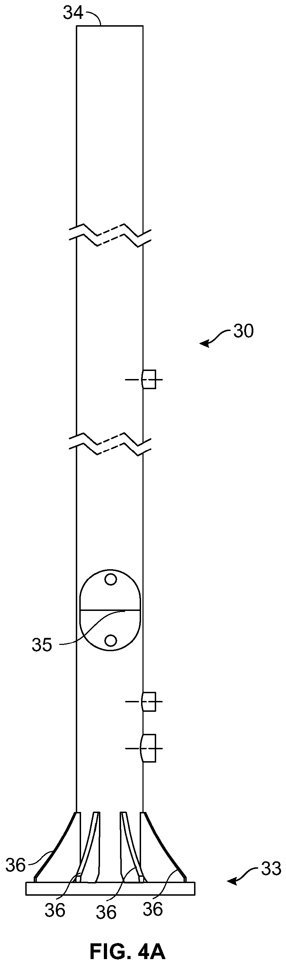

Referring now to Figure 1, a temporary sign support system is indicated generally at 10. The system 10 comprises a sign 20, a vertical support 30 (fixed in length in this embodiment but may be adjustable in length), a horizontal base 40, connected to concrete barriers 50, 50' via support brackets 60, 60'. The system includes an optional vertical brace 70. When the system comprises 2 vertical braces 70, normal to each other, to further support vertical support 30, the system is AASHTO and CHBDC compliant. The system further comprises a solar panel 80, a battery box 90 (in this embodiment two battery boxes) and a controller 100. The concrete barriers 50, 50' are of the type used to protect a work site as well as redirecting traffic flow during construction or accidents or the like. The concrete barriers 50, 50' allow for the support system 10 to straddle an existing permanent median 500, which divides two traffic roadways, typically two roadways of opposing traffic flow, which may be a concrete median, a steel median, a ditch, or the like. Although depicted here using two temporary concrete barriers, the support system may be used with two permanent barriers, or a combination of a temporary and permanent barrier or a combination of any foundation member. Each concrete barrier 50 (and 50') has a wide base 51 and walls 52 that taper upward to a narrow flat top 53. The base 51 is typically 800 mm in width and the height is typically 1125 mm. As best seen in Figures 2, 2A and 2B, the support bracket (60, 60') is used to connect the system 10 to the concrete barriers 50, 50' are depicted. Figure 2 is a perspective view, Figure 2A is a front view and Figure 2B is a side view. Also depicted in Figures 2A and 2B are the vertical braces 70 and horizontal base 40 attached to the support bracket 60. The support bracket 60 has a back 61 two sides 62, 62' and a top 64. Four threaded rods 66 are shown going through the threaded rod apertures 67 which run through the back 61 of the support bracket 60 in a slightly angled horizontal plane to assist in the securement of the bracket 60 onto the wall 52 proximate the top 53 of the concrete barrier 50. The threaded rods 66 are preferably ASTM A193 grade B7, but any suitable material may be used. The support bracket 60 may be made of steel, however any suitable material may be chosen. Bracket 60 includes on top 64, an aperture 64' to receive the horizontal base 40. In particular, a threaded rod 41, with a articulately connected base plate 42 at one end of said threaded rod, is attached to said bracket top 64 via said aperture 64'. In this instance, the aperture is threaded to complement and securely receive the threaded rod 41. The threaded rod 41 is further secured onto the top 64 of the bracket 60, by the placement of a hex nut 43 on the threaded rod 41 above the top 64 and a hex nut 44 on the threaded rod 41 below the top 64, such that the hex nuts 43, 44 are tightened on said threaded rod 41 such that the threaded rod 41 is securely attached to the bracket 60. The base plate 42 is square in shape and is articulately connected to said threaded rod 41 by a ball joint 44, allowing the base plate 42 to articulate on said threaded rod 41 allowing for any angular adjustment of said horizontal base 40, when connected onto the wall 52 of the concrete barriers 50, 50'. The preferred material for the ball joint 44 is AISA 4140 Alloy Steel (Fy=415 MPa) but any suitable material may be used. The base plate 42 further comprises four apertures 45 to receive the horizontal base 40. The preferred material for the base plate 42 is steel but any suitable material may be used. Referring now to Figures 3 and 3A, Horizontal base 40, in this embodiment, includes a pair of end supports comprising of rectangular hollow shaped central portion 46 with two ends 47, 47', a top 471, bottom 472 and two sides 473, and a central support 40' connecting the pair of end supports. The central portion 46 includes a plurality of spaced apart apertures 474 aligned and running through said top 471 and bottom 472. Each end 47, 47' receives a rectangular hollow shaped end portion 48, 48'. Each end portion 48, 48' include a top 481, bottom 482 and two sides 483. Each end portion 48, 48' comprise a plurality of spaced apart apertures 484 aligned and running through said top 481 and bottom 482. As best seen in Figure 3A, each end portion 48, 48' are received by the central portion 46 and connected to each other via hex bolts running through apertures 474 and 484. As can be seen, in this embodiment, end portions include more apertures than the central portion. This allows for adjusting the length of the horizontal base 40 as needed, accommodating barriers that are separated at various distances from each other. In another embodiment, end portions 48, 48' may be of different lengths to further accommodate various lengths. In yet another embodiment end portions 48, 48' of various lengths, along with apertures 474 and 484 spaced apart at various intervals, along with shims and/or shim plates may be used in combination to accommodate barriers separated at various distances. End portions include at one end thereof, distant the apertures 484, base plate connector apertures 485 for alignment with apertures 45 of said base plate 42. In this embodiment four hex bolts 486 are used to connect the horizontal base 40 to said support bracket 60, 60'. On one side 473 of central portion 46, are two spaced apart steel plates 475 to receive the central support 40' that receives vertical support 30, via a vertical support connector 31, as best seen in Figure 4. In this embodiment, vertical support connector 31 comprises a ball swivel joint 32 similar to the ball joint 44 described above. As best seen in Figure 4A, vertical support 30, comprises a steel column having a base 33 and a top 34. Base 33 is connected to the ball swivel joint 32 which in turn is connected to the central support 40'. Proximate the base thereof, vertical support 30 further comprises a hand hole 35 to facilitate movement during installation and deinstallation of said system as well as facilitate running any wires through the vertical support 30 as needed. Said vertical support base 33 is comprised of a plurality of vertically oriented reinforcement ribs 36, which further enhance rigidity. Support bracket 60 includes on side 62 a vertical brace connector 67. In this embodiment the vertical brace connector 67 is a pair of spaced apart plates 68, 68' to receive the vertical brace 70. Each plate 68, 68' includes an aperture 69, 69' for pivotally receiving the vertical brace 70.

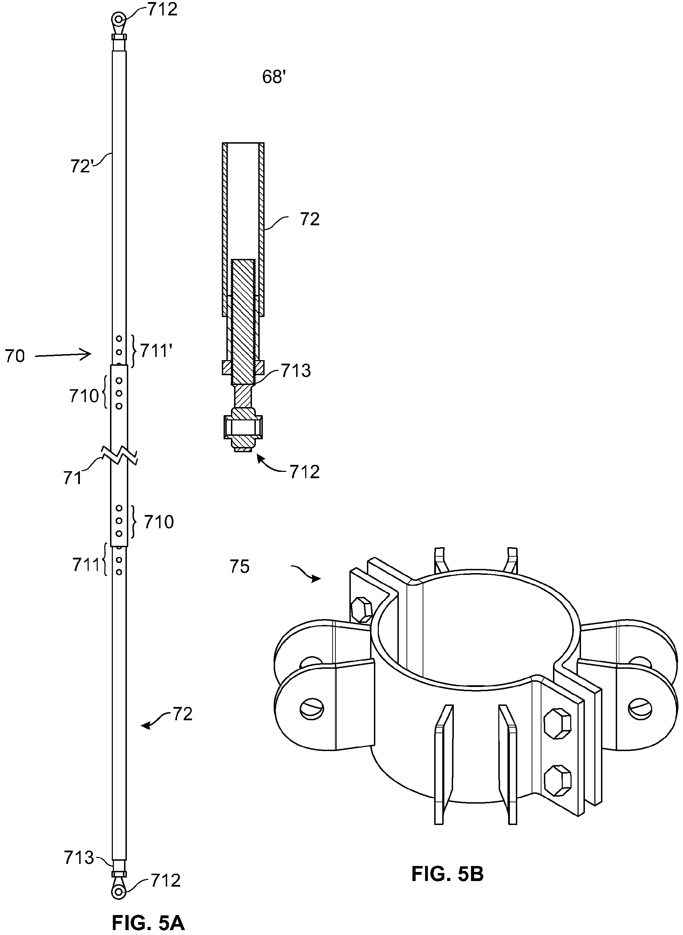

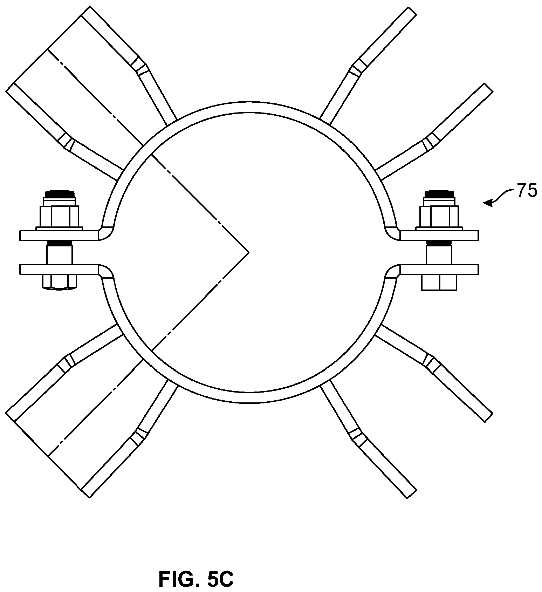

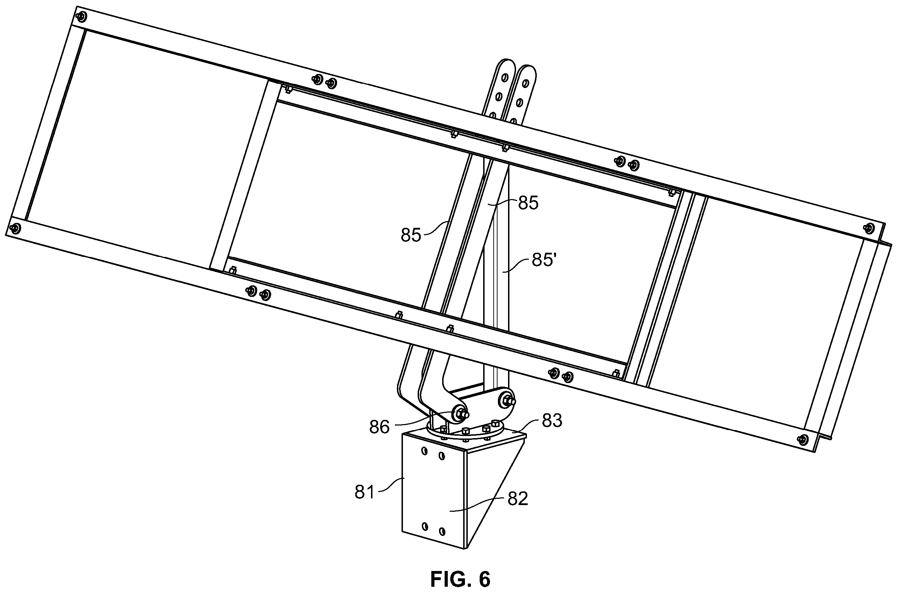

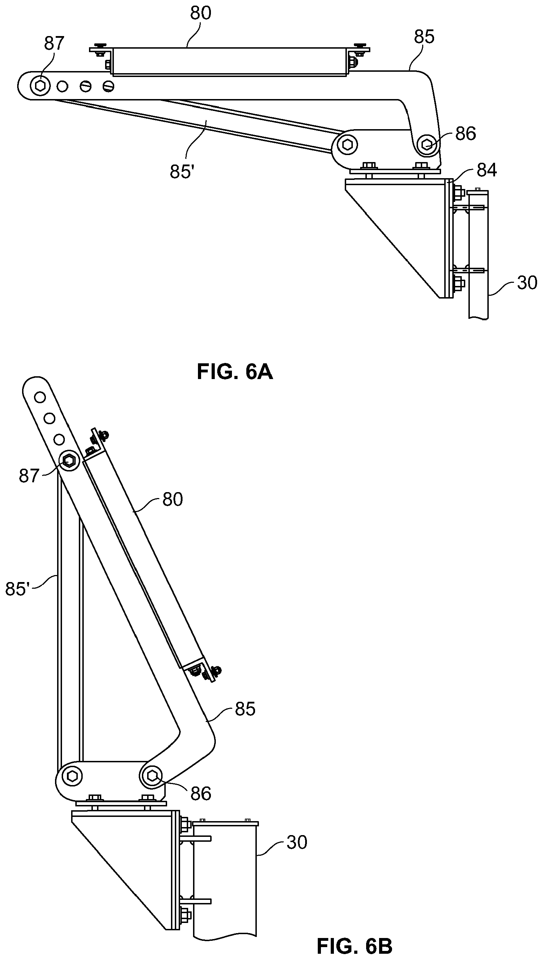

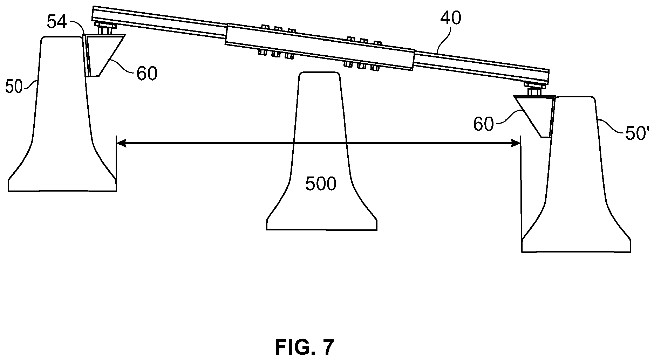

Referring now to Figure 5A, Vertical brace 70 comprises a central portion 71 and two adjustable end portions 72, 72'. Central portion 71 includes a plurality of spaced apart apertures 710 running along the length of said central portion. Each of said adjustable end portions 72, 72' include a plurality of spaced apart apertures 711, 711' running along the length thereof. Depending on the desired length of the vertical brace 70, apertures 710 are aligned with apertures 711, 711' and end portions 72, 72' are connected to the central portion 71 via a clevis pin (not shown), preferably with a reusable cotter pin (not shown). However, other connectors may be used. In one embodiment, each of said vertical brace comprises a pivotal connector, preferably a end tie rod 712 proximate the ends thereof. One for connection to said support bracket 60 and another for connection to said vertical support 30. The end tie rod 712 , in this embodiment, is threaded at one end 713 which threads into a threaded end of the vertical brace 70, allowing for further adjustment of the length of the vertical brace 70. Preferably, said vertical brace 70 is connected to said vertical support 30 via a collar 75 (as best seen in Figures 5A and 5B) on said vertical support 30. Collar 75 is preferably adjustable along the length of said vertical support 30. The adjustable lengths of the horizontal base and the vertical brace 70, together with the ball joints of the vertical support and the horizontal base allows for the system to accommodate situations where the concrete barriers are at different heights, whilst allowing for the sign 20 to be readable and maintained in a substantially level position. In this embodiment, there are four vertical braces 70, although there may be none or at least one. It is preferred to have at least two vertical braces 70, normal to each other in order to meet applicable code requirements such as wind load, although vertical support 30 will remain relatively vertical with no vertical braces 70, one brace 70 or 2 braces at an angle other than 90 degrees to each other. Sign 20 is connected to said vertical support 30, above said collar 75, by a sign support collar (not shown), or by any suitable means. Referring now to Figures 6, 6A and 6B, Solar panel 80 is attached proximate the top of said vertical support 30. Preferably, said solar panel 80 is pivotally attached to said vertical support 30, to allow for angular adjustment of said solar panel allowing for optimal orientation for solar energy capture. The preferred range of angular adjustment is between 0 to 65 degrees relative to horizontal. In a preferred embodiment, the solar panel 80 is attached proximate the vertical support by a solar panel bracket 81, preferably a 90 degree bracket with a back 82 and a top 83. The back 82 is attached to the vertical support by four hex bolts received in a solar panel bracket plate 84 attached to the vertical support 30. The solar panel is attached to the top 83 of the solar panel bracket 81 by a hinged arm 85. Hinged arm 85 has a first end 86 and a second end 87. The first end 86 is pivotally connected to the top 83 of the bracket 81. In this embodiment, there is a second hinged arm 85' pivotally connected to the top of the bracket 81 but distant the pivotal connection of the first hinged arm 85. The second end 87 of both arms 85, 85' are pivotally connected to each other. The solar panel 80 is connected along the length of arm 85, such that when the first end 86 of arms 85,85' pivot, the solar panel 80 moves angularly, preferably between 0 and 65 degrees. When arm 85 is 65 degrees from horizontal, arm 85' is 90 degrees from horizontal. The system 10 further comprises at least one battery box 90, preferably two battery boxes for storing energy captured by the solar panel 80 and powering the controller 100 and sign 20. Controller 100 provides a control of the message on the sign 20 as well as any other parameters as needed. The controller also provides regulated power to the sign 20, and may also record and transmit data related to the system. Referring now to Figure 7, the system 10 is shown in use when there are two roadways of different elevations separated by a permanent median 500. In this instance, the base 40 is adjustably connected at a 10° differential in elevation at one end of the temporary barriers 50, 50' and the center line of the central support 30 is at 80° to allow for the central support and the sign to be level for the viewer to be able to read the sign. If needed, additional shim plates may be used between the barriers 50, 50' and the brackets.

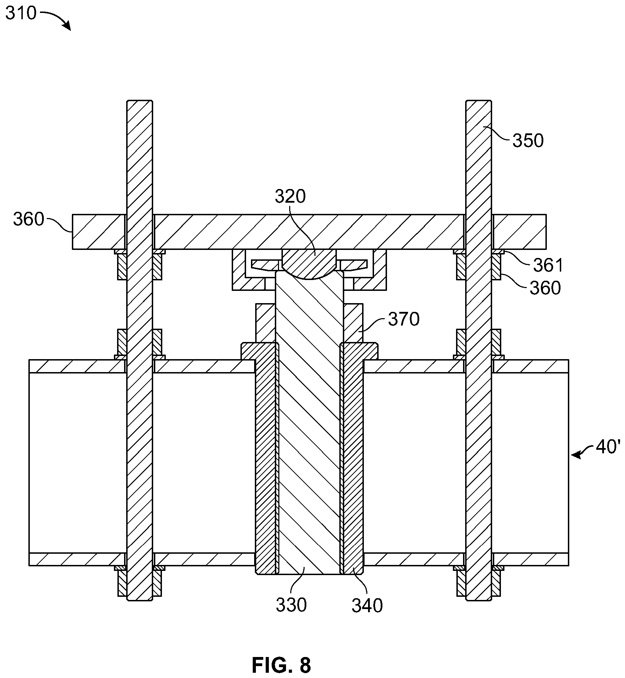

Referring now to Figure 8, there is provided a cross section of a vertical support connector 310 comprising a plate 360, a ball joint 320 forming part of the plate 360 and an externally threaded rod 330 kept in place with an internal threaded bushing 340 and a hex jam nut 370. In this instance this differs from the vertical support connector of Figure 4 in that the externally threaded rod 330 does not extend beyond the central support 40' allowing for more clearance underneath the central support 40'. The vertical support connector 310 includes two threaded rods 350 further connecting the plate 360 to the central support 40' reducing rotation of the vertical support 30 in relation to the central support 40' in high winds or the like. Each threaded rod 350 is situated on either side of the internally threaded rod 330 and proximate the perimeter of the plate 360. Each threaded rod 350 is secured in place by a number of hex nuts 360 preferably together with hex nut washers 361.

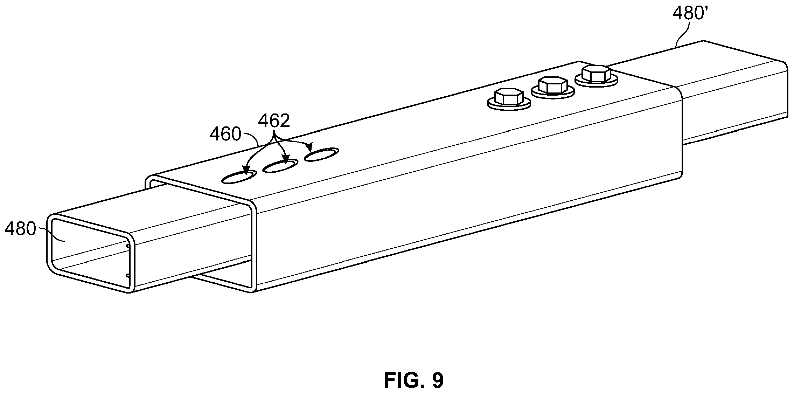

Referring now to Figure 9, there is provided a perspective view of central portion 460 and the central portion apertures in the form of elongated slots 462. End portions 480, 480' also include apertures 484 similar to those depicted in Figure 3A. In this instance, when hex bolts are used to connect the end portions 480, 480' to central portion 460, the elongated slots 462 will allow the end portions 480, 480' to move along central portion 460 for fine adjustment of length during placement on a barrier and also facilitate absorbing load upon impact or collision. An alternative to this would be for the elongated slots to be on the end portions and the central portion apertures would be smaller and circular, still allowing for fine adjustment of end portions to central portion and facilitate absorbing load upon impact or collision.

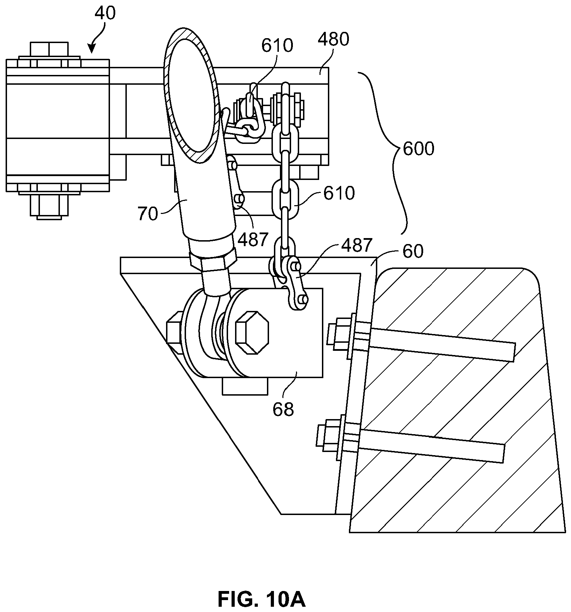

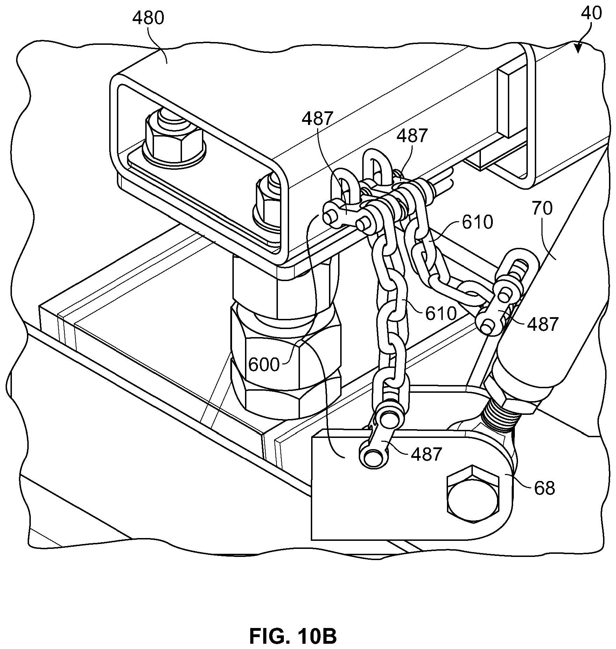

Referring now to Figures 10A and 10B, there is provided a perspective view of the vertical brace tether system 600 which tethers the horizontal base 40 to the support brackets 60, 60 ' (not shown) and to the vertical brace 70. In this instance, the tether system comprises a pair of chains 610, preferably commercial grade steel known to persons skilled in the art, wherein one end of the chains is connected to the end portions 480, 480'(not shown) via cotter pin shackles 487 and the other end of one chain is connected to one of the spaced apart plates 68, 68'(not shown) of the support brackets 60, 60'(not shown) via a cotter pin shackle 487, and the other end of the second chain is connected to the vertical brace 70 via a cotter pin shackle 487. The chains 610 are slack when connected to the cotter pin shackles 487, and the cotter pin shackles 487 allow for movement of the chain on the shackle for ease of installation.

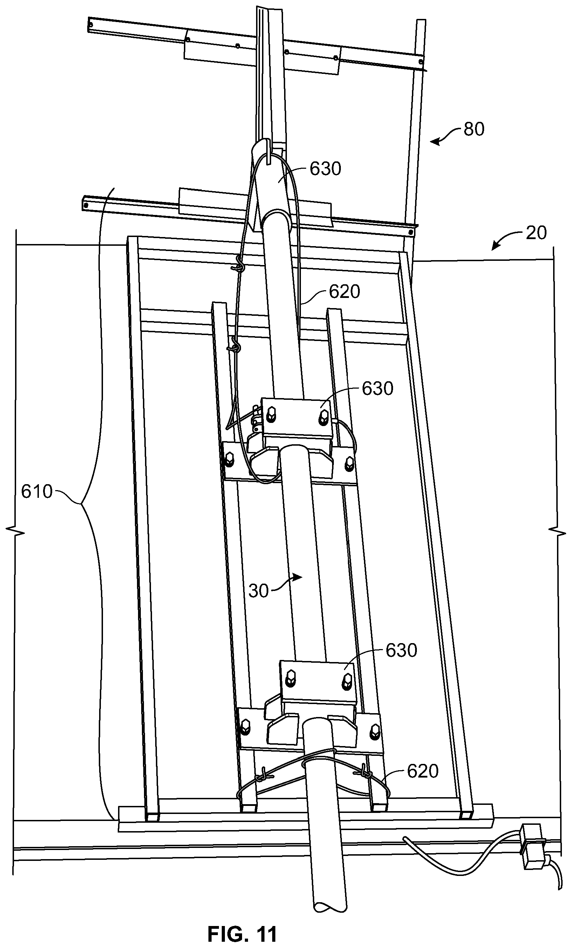

Referring now to Figure 11, there is provided a perspective view of the tether system 610 that tethers the sign 20 and solar panel 80 to the central support 30. In this instance, the sign tether system 610 comprises a cable 620, preferably a commercial grade steel cable. The cable 620 is slightly slacked to allow for some absorbing of any load should either the sign 20, solar panel 80 or both be detached from the central support 30 support brackets 630. If the support brackets 630 detach from the central support 30, the sign tether system 610 will reduce the sign 20 and/or solar panel 80 from detaching from the central support 30.

### Example 1

### MASH Testing of Sign Support System

The support system defined herein was tested under MASH 3-11. The evaluation criteria for test MASH 3-11 includes assessing structural adequacy and occupant risk during impact by a test vehicle. Structural adequacy evaluation criteria includes the test article should contain and redirect the vehicle or bring the vehicle to a controlled stop; the vehicle should not penetrate, underride, or override the installation although controlled lateral deflection of the test article is acceptable (as per TABLE 5-1. A. Safety Evaluation Guidelines of the American Association of State Highway and Transportation Officials Manual for Assessing Safety Hardware 2009). Occupant risk evaluation criteria includes detached elements, fragments, or other debris from the test article should not penetrate or show potential for penetrating the occupant compartment, or present undue hazard to other traffic, pedestrians, or personnel in a work zone. Deformations of, or intrusions into, the occupant compartment should not exceed limits set forth in Section 5.3 as follows: roof ≤4.0 in. (102 mm), windshield-no tear of plastic liner and maximum deformation of 3 in. (76 mm), window-no shattering of a side window resulting from direct contact with a structural member of the test article (this requires the side windows to be in the up position for testing)-in cases where the windows are laminated, the guidelines for windshields will apply, wheel/foot well and toe pan areas ≤ 9 in. (229 mm), side front panel (forward of A-pillar) ≤ 12 in. (305 mm), front side door area (above seat) ≤ 9 in. (229 mm), front side door area (below seat) ≤ 12 in. (305 mm), and floor pan and transmission tunnel areas ≤ 12 in. (305 mm); and Appendix E. (as per TABLE 5-1. D. Safety Evaluation Guidelines of the American Association of State Highway and Transportation Officials Manual for Assessing Safety Hardware 2009); the vehicle should remain upright during and after collision-the maximum roll and pitch angles are not to exceed 75 degrees (as per TABLE 5-1. F. Safety Evaluation Guidelines of the American Association of State Highway and Transportation Officials Manual for Assessing Safety Hardware 2009); Occupant impact velocities (OIV) maximum limit for the longitudinal and lateral component is 40 ft/s (12.2 m/s) (as per TABLE 5-1. H. Safety Evaluation Guidelines of the American Association of State Highway and Transportation Officials Manual for Assessing Safety Hardware 2009); and occupant ridedown acceleration maximum limit for longitudinal and lateral component is 20.49G (as per TABLE 5-1. I. Safety Evaluation Guidelines of the American Association of State Highway and Transportation Officials Manual for Assessing Safety Hardware 2009). MASH 3-11 evaluated the possible interaction of a test vehicle with the sign support system and evaluated the performance of the cross-bolted F-shape barrier pinned to the underlying asphalt (3 inches thick), which involved impacting a pinned-down F-shape barrier at the critical impact point (CIP) with a quad-cab pickup truck (2270 kg test inertia mass) at a target impact speed and angle of 100 km/h and 25 degrees. The actual impact speed and angle were 100.7 km/h and 24.7 degrees, respectively, which were within the MASH specified tolerances. After the impact, the vehicle was successfully contained and redirected. The vehicle did not interact with the sign support system. The sign support system did not fail due to the impact and the sign remained upright and supported as initially installed. The sign support system tested resulted in below maximum limits of the occupant impact velocity (OIV) and the occupant ridedown acceleration. In this example, the barrier base for the sign support system comprised two spaced apart 4000mm long by 1067mm high, x-type temporary concrete barriers (MTOD 911.190). Each temporary concrete barrier was pinned to the road base using a single 38mm diameter drift pin (MTOD 911.162). The barriers differ slightly from standard x-type in that they are built to the increased height of 1067mm to allow the sign to be installed over top of typical median barriers. The barriers are built to 4000mm long to allow for uneven or sloping ground as well as increased portability. Each of the barriers used a pinning void to allow installation of the drift pin helping to reduce the deflection of the barriers on impact. The support system was attached to the concrete barriers using steel brackets and a structural swivel joint. The joint allows for sloping of the road in any direction, as well as installation on isometric roadways. The joint is height-adjustable as well to allow for varying median barrier heights. During testing it was observed that the swivel joint helped to reduce the shock load of the vehicle impact by allowing minor rotation, which in turn prevented cracking of the barriers and deflection of the sign.

The frame of the sign has adjustable, telescopic outriggers (end portions) that can accommodate various widths between barriers. The outriggers were installed using torqued fasteners (i.e. bolts) located in slotted holes. During testing, the outriggers compressed slightly within the slotted holes, using friction of the bolts to help absorb the impact loads. The outriggers also have a restraining chain mitigating the outriggers from becoming detached from the support system in the event of a very severe collision. The chain attached the end of the outrigger to the bracket on the concrete barrier supports at each corner.

Hollow structural steel bracing (vertical brace) was installed from the base of the support bracket to a collar on the sign pole, just below the sign cabinet. This bracing is adjustable in length using multiple holes, as well as a threaded insert for fine adjustment. The hardware is vibration resistant by using lock nuts and cotter pins to prevent the bolts from coming loose. The vertical bracing is design for compression and tension loads. Structurally any 2 of the braces at 90 degrees to each other will support the loads, however 4 braces were installed in the event that one was damaged in an impact, the sign remains functional and safe. The ends of the bracing area also attached to the barrier brackets using restraint chains to prevent the bracing from entering the travelled portion of the road in the event of a severe impact broking the bracing connection.

The sign pole was attached to the frame using a swivel joint inserted into a threaded bushing that allows the sign to be installed plumb in all directions, regardless of the road slope. This threaded bushing also helps increase the clearance over the permanent median barrier as the bushing is recessed into the frame. During testing it was observed that this joint allowed minor rotation upon impact and prevented any oscillation or harmonic resonance from being transferred from the frame to the pole. Very minor deflection was observed at the top of the pole. The pole was bolted to the swivel joint using a flange connection, but two of the bolts extended entirely through the sign frame to limit twisting of the pole in the threaded bushing.

The sign cabinet was attached to the sign pole using two clamping brackets. In addition, the sign was tethered to the pole using steel cables to prevent the sign from coming free from the sign pole if it was directly impacted by an oversize load, or by flying debris in an impact. The tested deflection of x-type barrier (unrestrained) was approximately 300mm. The tested deflection (restrained and assembled with sign based) was less than 50mm.

As many changes can be made to the preferred embodiment without departing from the scope thereof; it is intended that all matter contained herein be considered illustrative and not in a limiting sense.

## Claims

1. A support system (10), for supporting an item, said system being mountable on at least two spaced apart foundation members (50, 50'), said system comprising:
i) a base support (40) having a first end and a second end, wherein said base support (40) further comprises:
a) a first foundation member bracket (60) for connection to the first foundation member (50), said first foundation member bracket (60) proximate said first end of said base support (40);
b) a second foundation member bracket (60') for connection to the second foundation member (50') distant said first foundation member (50), said second foundation member bracket (60'), proximate said second end of said base support (40);
each of said first and second foundation member brackets being articulately adjustable and connectable to said first and second foundation members (50, 50') respectively;
ii) a vertical support (30) for supporting said item, said vertical support having a first end and a second end wherein said second end is connectable to said base support (40); at least one item tether (610) for tethering said item to said vertical support (30); at least one vertical brace (70), said vertical brace having a first end and a second end; wherein said first end of said vertical brace is connectable to said vertical support (30) between said first end and said second end of said vertical support (30); and said second end of said vertical brace (70) is connectable proximate one end of said base support (40); wherein said base support (40) further comprises at least one vertical support connector (31) for reducing a) rotation of said vertical support (30) on said base support (40) and b) detachment of said vertical support (30) from said base support (40), and at least one vertical brace tether (600) for tethering said at least one vertical brace (70) to said base support (40).

2. The support system (10) according to claim 1 wherein said base support (40) is length adjustable.

3. The support system (10) according to claim 1 or 2 wherein said base support (40) comprises two base supports connectable to each other by a central base support; wherein each of said base supports further comprise a central portion (46) and two end portions (48), wherein said central portion further comprise complementary spaced apart apertures (47, 47') allowing for telescopic connecting of each of said end portions (48) to said central portion (46) wherein said complementary spaced apart apertures (47, 47') on said central portion are selected from being : i) larger than the complementary spaced apart apertures of each of said end portions; and ii) smaller than the complementary spaced apart apertures of each of said end portions.

4. The support system (10) according to claims 1-2 wherein said vertical support (30) is articulately mounted on said base support (40).

5. The support system (10) according to claim 3 wherein said vertical support (30) is articulately mounted on said central base support (40).

6. The support system (10) according to claims 1-5 wherein said vertical support (30) is height adjustable.

7. The support system (10) according to claims 3-6 wherein the second base support (40') of said two base supports further comprises:
iii) a first foundation member bracket (60) for connection to the first foundation member (50), said first foundation member bracket (60) proximate said first end of said second base support (40'); and
iv) a second foundation member bracket (60') for connection to the second foundation member (50') distant said first foundation member (50), said second foundation member bracket (60') proximate said second end of said second base support (40').

8. The support system (10) according to claims 1-7 wherein said at least one vertical brace (70) is length adjustable.

9. The support system (10) according to claim 7 wherein said at least one vertical brace (70) is pivotally connectable to said vertical support (30).

10. The support system (10) according to claim 1 wherein said item comprises at least one of: a sign (20), a radar based traffic monitoring sensor, a Bluetooth vehicle tracking sensor, a video detection traffic monitoring sensor, weather station equipment for monitoring at least one of wind, temperature, barometer, humidity, and radar, a road temperature sensor, a road surface sensor, a pollution monitoring sensor, a CCTV camera, at least one communication device, preferably selected from a cellular modem, a Bluetooth, a wi-fi modem, a satellite cellular modem and combinations thereof.

11. The support system (10) according to claim 1 further comprising a power source.

12. The support system (10) according to claim 11 wherein said power source comprises at least one of a solar panel (80), a battery (90), a wind turbine generator, a generator, preferably a propane, gas or diesel generator, a fuel cell, preferably a hydrogen or other type of fuel cell, and combinations thereof.

13. The support system (10) according to claims 1-12 further comprising a controller (100).

14. The support system (10) according to claim 10 wherein said sign (20) comprises a variable message sign.

15. A method of mounting the support system (10) according to claims 8-14, said method comprising:
i) anchoring at least one foundation member bracket (60, 60'), to each spaced apart foundation member (50, 50');
ii) mounting, said each of said ends of said two length adjustable base supports (40) to a respective foundation member bracket (60, 60');
iii) connecting said base supports (40) to each other with a central base support;
iv) attaching, a vertical support (30) to said central base support;
v) attaching at least one vertical brace (70) to said vertical support (30);
vi) levelling said vertical support (30);
vii) attaching a sign (20) as item to said vertical support (30);
viii) attaching a solar panel (80) to said vertical support (30);
ix) orienting said sign (20) and said solar panel (80) as required; and
x) tightening any connections and attachments ensuring a secure connection.

16. The support system (10) according to claim 12 further comprising at least one power source tether (610) for tethering said at least one power source to said vertical support.

17. The support system (10) according to claim 16 wherein said at least one power source is a solar panel and said at least one power source tether (610) is a solar panel tether.

18. The support system (10) according to claims 16 and 17 wherein said tether is a cable.

19. The support system (10) any one according to claims 1-14 wherein said at least one item tether is a cable.

20. The support system (10) according to claims 1-14 wherein said at least one vertical brace tether (600) is a chain.

21. The support system (10) according to claim 20 wherein said chain is a steel chain.

22. The support system (10) according to claim 3 wherein the larger spaced apart apertures are slot like.

23. The support system (10) according to claims 1-14 and 16-20 wherein said system is MASH compliant.

24. The support system (10) according to claims 1-14 and 16-20 wherein said system is: i) Canadian Highway Bridge Design Code compliant for at least one of the following: wind, seismic, environmental loading and combinations thereof; ii) American Association of State Highway and Transportation Officials compliant; and combinations thereof.

25. The support system (10) according to claims 1-14 and 16-24 being mounted on at least two spaced apart end to end parallel barriers.

26. The support system (10) according to claim 25 wherein said at least two barriers are preferably temporary concrete barriers.

27. The support system (10) according to claim 26 wherein said temporary concrete barriers are each pinned down to a road.

28. The support system (10) according to claims 1 or 3 further comprising a base support tether for tethering said base support to at least one of said first foundation member bracket and said second foundation member bracket.

29. The support system (10) according to claim 28 wherein said tether is a chain.

30. The support system (10) according to claim 29 wherein said chain is a steel chain.

31. The support system (10) according to claims 1-14 and 16-30 comprising at least two vertical braces (70) normal to one another.

## Patentansprüche

1. Tragsystem (10) zum Tragen eines Gegenstands, wobei das System an mindestens zwei beabstandeten Fundamentelementen (50, 50') montierbar ist, wobei das System Folgendes umfasst:
i) einen Basisträger (40), der ein erstes Ende und ein zweites Ende aufweist,
wobei der Basisträger (40) ferner Folgendes umfasst:
a) eine erste Fundamentelementhalterung (60) zur Verbindung mit dem ersten Fundamentelement (50), wobei sich die erste Fundamentelementhalterung (60) in der Nähe des ersten Endes des Basisträgers (40) befindet;
b) eine zweite Fundamentelementhalterung (60') zur Verbindung mit dem zweiten Fundamentelement (50'), das von dem ersten Fundamentelement (50) entfernt ist, wobei sich die zweite Fundamentelementhalterung (60') in der Nähe des zweiten Endes des Basisträgers (40) befindet;
wobei jede der ersten und der zweiten Fundamentelementhalterung gelenkig einstellbar und mit dem ersten bzw. dem zweiten Fundamentelement (50, 50') verbindbar ist;
ii) einen vertikalen Träger (30) zum Tragen des Gegenstands, wobei der vertikale Träger ein erstes Ende und ein zweites Ende aufweist, wobei das zweite Ende mit dem Basisträger (40) verbindbar ist; mindestens ein Gegenstandhalteseil (610) zum Anbinden des Gegenstands an dem vertikalen Träger (30); mindestens eine vertikale Strebe (70), wobei die vertikale Strebe ein erstes Ende und ein zweites Ende aufweist; wobei das erste Ende der vertikalen Strebe zwischen dem ersten Ende und dem zweiten Ende des vertikalen Trägers (30) mit dem vertikalen Träger (30) verbindbar ist; und das zweite Ende der vertikalen Strebe (70) nahe einem Ende des Basisträgers (40) verbindbar ist; wobei der Basisträger (40) ferner mindestens einen vertikalen Trägerverbinder (31) zum Reduzieren a) von Drehung des vertikalen Trägers (30) auf dem Basisträger (40) und b) Lösen des vertikalen Trägers (30) von dem Basisträger (40) umfasst,
und mindestens ein vertikales Verstrebungshalteseil (600) zum Anbinden der mindestens einen vertikalen Strebe (70) an dem Basisträger (40).

2. Tragsystem (10) nach Anspruch 1, wobei der Basisträger (40) längenverstellbar ist.

3. Tragsystem (10) nach Anspruch 1 oder 2, wobei der Basisträger (40) zwei Basisträger umfasst, die durch einen zentralen Basisträger miteinander verbindbar sind; wobei jeder der Basisträger ferner einen zentralen Abschnitt (46) und zwei Endabschnitte (48) umfasst, wobei der zentrale Abschnitt ferner komplementäre beabstandete Öffnungen (47, 47') umfasst, die eine teleskopische Verbindung jedes der Endabschnitte (48) mit dem zentralen Abschnitt (46) erlauben, wobei die komplementären beabstandeten Öffnungen (47, 47') auf dem zentralen Abschnitt ausgewählt sind aus: i) größer als die komplementären beabstandeten Öffnungen jedes der Endabschnitte; und ii) kleiner als die komplementären beabstandeten Öffnungen jedes der Endabschnitte.

4. Tragsystem (10) nach den Ansprüchen 1-2, wobei der vertikale Träger (30) gelenkig an dem Basisträger (40) montiert ist.

5. Tragsystem (10) nach Anspruch 3, wobei der vertikale Träger (30) gelenkig an dem zentralen Basisträger (40) montiert ist.

6. Tragsystem (10) nach den Ansprüchen 1-5, wobei der vertikale Träger (30) höhenverstellbar ist.

7. Tragsystem (10) nach den Ansprüchen 3-6, wobei der zweite Basisträger (40') der zwei Basisträger ferner Folgendes umfasst:
iii) eine erste Fundamentelementhalterung (60) zur Verbindung mit dem ersten Fundamentelement (50), wobei sich die erste Fundamentelementhalterung (60) nahe dem ersten Ende des zweiten Basisträgers (40') befindet; und
iv) eine zweite Fundamentelementhalterung (60') zur Verbindung mit dem zweiten Fundamentelement (50'), das von dem ersten Fundamentelement (50) entfernt ist, wobei sich die zweite Fundamentelementhalterung (60') in der Nähe des zweiten Endes der zweiten Basisträger (40') befindet.

8. Tragsystem (10) nach den Ansprüchen 1-7, wobei die mindestens eine vertikale Strebe (70) längenverstellbar ist.

9. Tragsystem (10) nach Anspruch 7, wobei die mindestens eine vertikale Strebe (70) schwenkend mit dem vertikalen Träger (30) verbindbar ist.

10. Tragsystem (10) nach Anspruch 1, wobei der Gegenstand mindestens eines von Folgendem umfasst: einen Schild (20), einen radarbasierten Verkehrsüberwachungssensor, einen Bluetooth-Fahrzeugverfolgungssensor, einen Videoerfassungs-Verkehrsüberwachungssensor, Wetterstationsausrüstung zum Überwachen von mindestens einem von Wind, Temperatur, Barometer, Feuchtigkeit und Radar, einen Straßentemperatursensor, einen Straßenoberflächensensor, einen Verschmutzungsüberwachungssensor, eine CCTV-Kamera, mindestens eine Kommunikationsvorrichtung, die bevorzugt aus einem Mobilfunkmodem, einem Bluetooth, einem Wi-Fi-Modem, einem Satelliten-Mobilfunkmodem und Kombinationen davon ausgewählt ist.

11. Tragsystem (10) nach Anspruch 1, das ferner eine Stromquelle umfasst.

12. Tragsystem (10) nach Anspruch 11, wobei die Stromquelle mindestens eines von einem Solarpanel (80), einer Batterie (90), einem Windturbinengenerator, einem Generator, bevorzugt einem Propan-, Gas- oder Dieselgenerator, einer Brennstoffzelle, bevorzugt von einem Wasserstofftyp oder einer anderen Art von Brennstoffzelle, und Kombinationen davon umfasst.

13. Tragsystem (10) nach den Ansprüchen 1-12, das ferner eine Steuervorrichtung (100) umfasst.

14. Tragsystem (10) nach Anspruch 10, wobei das Schild (20) ein variables Nachrichtenzeichen umfasst.

15. Verfahren zum Montieren des Tragsystems (10) nach den Ansprüchen 8-14, wobei das Verfahren Folgendes umfasst:
i) Verankern mindestens einer Fundamentelementhalterung (60, 60') an jedem beabstandeten Fundamentelement (50, 50');
ii) Montieren jedes der Enden der zwei längenverstellbaren Basisträger (40) an einer jeweiligen Fundamentelementhalterung (60, 60');
iii) Verbinden der Basisträger (40) miteinander mit einem zentralen Basisträger;
iv) Anbringen eines vertikalen Trägers (30) an dem zentralen Basisträger;
v) Anbringen mindestens einer vertikalen Strebe (70) an dem vertikalen Träger (30);
vi) Nivellieren des vertikalen Trägers (30);
vii) Anbringen eines Schildes (20) als Element an dem vertikalen Träger (30);
viii) Anbringen eines Solarpanels (80) an dem vertikalen Träger (30);
ix) Ausrichten des Schildes (20) und des Solarpanels (80) nach Bedarf; und
x) Festziehen aller Verbindungen und Anbringungen, die eine sichere Verbindungen sicherstellen.

16. Tragsystem (10) nach Anspruch 12, das ferner mindestens ein Stromquellenhalteseil (610) zum Anbinden der mindestens einen Stromquelle an dem vertikalen Träger umfasst.

17. Tragsystem (10) nach Anspruch 16, wobei die mindestens eine Stromquelle ein Solarpanel ist und das mindestens eine Stromquellenhalteseil (610) ein Solarpanelhalteseil ist.

18. Tragsystem (10) nach den Ansprüchen 16 und 17, wobei das Halteseil ein Kabel ist.

19. Tragsystem (10) nach einem der Ansprüche 1-14, wobei das mindestens eine Gegenstandshalteseil ein Kabel ist.

20. Tragsystem (10) nach den Ansprüchen 1-14, wobei das mindestens eine Halteseil (600) für vertikale Strebe eine Kette ist.

21. Tragsystem (10) nach Anspruch 20, wobei die Kette eine Stahlkette ist.

22. Tragsystem (10) nach Anspruch 3, wobei die größeren beabstandeten Öffnungen schlitzartig sind.

23. Tragsystem (10) nach den Ansprüchen 1-14 und 16-20, wobei das System MASH-konform ist.

24. Tragsystem (10) nach den Ansprüchen 1-14 und 16-20, wobei das System: i) für mindestens eines der folgenden mit dem Canadian Highway Bridge Design Code konform ist: Wind, Erdbeben, Umweltbelastung und Kombinationen davon; ii) mit dem American Association of State Highway and Transportation Officials konform ist; und Kombinationen davon.

25. Tragsystem (10) nach den Ansprüchen 1-14 und 16-24, das an mindestens zwei beabstandeten parallelen Ende-an-Ende-Barrieren montiert ist.

26. Tragsystem (10) nach Anspruch 25, wobei die mindestens zwei Barrieren bevorzugt temporäre Betonbarrieren sind.

27. Tragsystem (10) nach Anspruch 26, wobei die temporären Betonbarrieren jeweils an einer Straße verankert sind.

28. Tragsystem (10) nach Anspruch 1 oder 3, das ferner ein Basisträgerhalteseil zum Anbinden des Basisträgers an mindestens einer der ersten Fundamentelementhalterung und der zweiten Fundamentelementhalterung umfasst.

29. Tragsystem (10) nach Anspruch 28, wobei das Halteseil eine Kette ist.

30. Tragsystem (10) nach Anspruch 29, wobei die Kette eine Stahlkette ist.

31. Tragsystem (10) nach den Ansprüchen 1-14 und 16-30, das mindestens zwei vertikale Streben (70) senkrecht zueinander umfasst.

## Revendications

1. Système de support (10), pour supporter un article, ledit système pouvant être monté sur au moins deux éléments de fondation espacés (50, 50'), ledit système comprenant :
i) un support de base (40) ayant une première extrémité et une seconde extrémité,
dans lequel ledit support de base (40) comprend en outre :
a) un étrier de premier élément de fondation (60) pour connexion au premier élément de fondation (50), ledit étrier de premier élément de fondation (60) à proximité de ladite première extrémité dudit support de base (40) ;
b) un étrier de second élément de fondation (60') pour connexion au second élément de fondation (50') distant dudit premier élément de fondation (50), ledit étrier de second élément de fondation (60') à proximité de ladite seconde extrémité dudit support de base (40) ;
chacun desdits étriers de premier et second élément de fondation étant ajustable de manière articulée et pouvant être connecté auxdits premier et second éléments de fondation (50, 50') respectivement ;
ii) un support vertical (30) pour supporter ledit article, ledit support vertical ayant une première extrémité et une seconde extrémité, dans lequel ladite seconde extrémité peut être connectée audit support de base (40) ; au moins une attache d'article (610) pour attacher ledit article audit support vertical (30) ; au moins un renfort vertical (70), ledit renfort vertical ayant une première extrémité et une seconde extrémité ; dans lequel ladite première extrémité dudit renfort vertical peut être connectée audit support vertical (30) entre ladite première extrémité et ladite seconde extrémité dudit support vertical (30) ; et ladite seconde extrémité dudit renfort vertical (70) peut être connectée à proximité d'une extrémité dudit support de base (40) ; dans lequel ledit support de base (40) comprend en outre au moins un connecteur de support vertical (31) pour réduire a) la rotation dudit support vertical (30) sur ledit support de base (40) et b) le détachement dudit support vertical (30) dudit support de base (40),
et au moins une attache de renfort vertical (600) pour attacher ledit au moins un renfort vertical (70) audit support de base (40).

2. Système de support (10) selon la revendication 1, dans lequel ledit support de base (40) est ajustable en longueur.

3. Système de support (10) selon la revendication 1 ou 2, dans lequel ledit support de base (40) comprend deux supports de base pouvant être connectés l'un à l'autre par un support de base central ; dans lequel chacun desdits supports de base comprend en outre une partie centrale (46) et deux parties d'extrémité (48), dans lequel ladite partie centrale comprend en outre des ouvertures espacées complémentaires (47, 47') permettant une connexion télescopique de chacune desdites parties d'extrémité (48) à ladite partie centrale (46), dans lequel lesdites ouvertures espacées complémentaires (47, 47') sur ladite partie centrale sont choisies parce qu'elles sont : i) plus grandes que les ouvertures espacées complémentaires de chacune desdites parties d'extrémité ; et ii) plus petites que les ouvertures espacées complémentaires de chacune desdites parties d'extrémité.

4. Système de support (10) selon les revendications 1 à 2, dans lequel ledit support vertical (30) est monté de manière articulée sur ledit support de base (40).

5. Système de support (10) selon la revendication 3, dans lequel ledit support vertical (30) est monté de manière articulée sur ledit support de base central (40).

6. Système de support (10) selon les revendications 1 à 5, dans lequel ledit support vertical (30) est ajustable en hauteur.

7. Système de support (10) selon les revendications 3 à 6, dans lequel le second support de base (40') desdits deux supports de base comprend en outre :
iii) un étrier de premier élément de fondation (60) pour connexion au premier élément de fondation (50), ledit étrier de premier élément de fondation (60) à proximité de ladite première extrémité dudit second support de base (40') ; et
iv) un étrier de second élément de fondation (60') pour connexion au second élément de fondation (50') distant dudit premier élément de fondation (50), ledit étrier de second élément de fondation (60') à proximité de ladite seconde extrémité dudit second support de base (40').

8. Système de support (10) selon les revendications 1 à 7, dans lequel ledit au moins un renfort vertical (70) est ajustable en longueur.

9. Système de support (10) selon la revendication 7, dans lequel ledit au moins un renfort vertical (70) peut être connecté de manière pivotante audit support vertical (30).

10. Système de support (10) selon la revendication 1, dans lequel ledit article comprend au moins l'un parmi : un panneau (20), un capteur de surveillance de trafic basé sur un radar, un capteur de suivi de véhicule Bluetooth, un capteur de surveillance de trafic à détection vidéo, un équipement de station météorologique pour surveiller au moins un parmi le vent, la température, la pression barométrique, l'humidité et le radar, un capteur de température de route, un capteur de surface de route, un capteur de surveillance de pollution, une caméra de vidéosurveillance, au moins un dispositif de communication, choisi de préférence parmi un modem cellulaire, un Bluetooth, un modem wi-fi, un modem cellulaire par satellite et des combinaisons de ceux-ci.

11. Système de support (10) selon la revendication 1, comprenant en outre une source de puissance.

12. Système de support (10) selon la revendication 11, dans lequel ladite source de puissance comprend au moins un parmi un panneau solaire (80), une batterie (90), un générateur d'éolienne, un générateur, de préférence un générateur au propane, au gaz ou diesel, une pile à combustible, de préférence une pile à combustible à hydrogène ou d'un autre type, et des combinaisons de ceux-ci.

13. Système de support (10) selon les revendications 1 à 12, comprenant en outre un dispositif de commande (100).

14. Système de support (10) selon la revendication 10, dans lequel ledit panneau (20) comprend un panneau à message variable.

15. Procédé de montage du système de support (10) selon les revendications 8 à 14, ledit procédé comprenant :
i) l'ancrage d'au moins un étrier d'élément de fondation (60, 60'), à chaque élément de fondation espacé (50, 50') ;
ii) le montage, de chacune précitée desdites extrémités desdits deux supports de base ajustables en longueur (40) à un étrier d'élément de fondation respectif (60, 60') ;
iii) la connexion desdits supports de base (40) l'un à l'autre avec un support de base central ;
iv) la fixation, d'un support vertical (30) audit support de base central ;
v) la fixation d'au moins un renfort vertical (70) audit support vertical (30) ;
vi) la mise de niveau dudit support vertical (30) ;
vii) la fixation d'un panneau (20) en tant qu'article audit support vertical (30) ;
viii) la fixation d'un panneau solaire (80) audit support vertical (30) ;
ix) l'orientation dudit panneau (20) et dudit panneau solaire (80) selon le besoin ; et
x) le serrage de n'importe quelles connexions et fixations assurant une connexion solide.

16. Système de support (10) selon la revendication 12, comprenant en outre au moins une attache de source de puissance (610) pour attacher ladite au moins une source de puissance audit support vertical.

17. Système de support (10) selon la revendication 16, dans lequel ladite au moins une source de puissance est un panneau solaire et ladite au moins une attache de source de puissance (610) est une attache de panneau solaire.

18. Système de support (10) selon les revendications 16 et 17, dans lequel ladite attache est un câble.

19. Système de support (10) selon l'une quelconque des revendications 1 à 14, dans lequel ladite au moins une attache d'article est un câble.

20. Système de support (10) selon les revendications 1 à 14, dans lequel ladite au moins une attache de renfort vertical (600) est une chaîne.

21. Système de support (10) selon la revendication 20, dans lequel ladite chaîne est une chaîne en acier.

22. Système de support (10) selon la revendication 3, dans lequel les ouvertures espacées les plus grandes sont en forme de fente.

23. Système de support (10) selon les revendications 1 à 14 et 16 à 20, dans lequel ledit système est conforme à MASH.

24. Système de support (10) selon les revendications 1 à 14 et 16 à 20, dans lequel ledit système est : i) conforme au Code canadien sur le calcul des ponts routiers pour au moins l'un des éléments suivants : charge de vent, charge sismique, charge environnementale et combinaisons de ceux-ci ; ii) conforme à l'Association des fonctionnaires des États responsables des routes et des transports ; et combinaisons de ceux-ci.

25. Système de support (10) selon les revendications 1-14 et 16-24 étant monté sur au moins deux barrières parallèles espacées bout à bout.

26. Système de support (10) selon la revendication 25, dans lequel lesdites au moins deux barrières sont de préférence des barrières en béton temporaires.

27. Système de support (10) selon la revendication 26, dans lequel lesdites barrières en béton temporaires sont chacune figées sur une route.

28. Système de support (10) selon la revendication 1 ou 3, comprenant en outre une attache de support de base pour attacher ledit support de base à au moins l'un dudit étrier de premier élément de fondation et dudit étrier de second élément de fondation.

29. Système de support (10) selon la revendication 28, dans lequel ladite attache est une chaîne.

30. Système de support (10) selon la revendication 29, dans lequel ladite chaîne est une chaîne en acier.

31. Système de support (10) selon les revendications 1 à 14 et 16 à 30, comprenant au moins deux renforts verticaux (70) normaux l'un à l'autre.
